# FASCICULE DE BREVET EUROPEEN

(11) **EP 3 697 630 B1**
(45) Date de publication et mention de la délivrance du brevet: **20.10.2021**
(21) Numéro de dépôt: 18800715.7
(22) Date de dépôt: 22.10.2018
(51) Int. Cl.: B60C 9/00, B60C 9/22, B60C 9/18

(54) **PNEUMATIQUE COMPRENANT DES ÉLÉMENTS DE RENFORT SOUS FORME DE BANDELETTES STRATIFIÉES**
REIFEN MIT VERSTÄRKUNGSELEMENTEN IN FORM VON LAMINIERTEN STREIFEN
TYRE COMPRISING REINFORCING ELEMENTS IN THE FORM OF LAMINATED STRIPS

(30) Priorité: 20.10.2017 FR 1759910
(43) Date de publication de la demande: 26.08.2020
(73) Titulaire: Compagnie Générale des Etablissements Michelin, 63000 Clermont-Ferrand (FR)
(72) Inventeur: PATAUT, Gaël, 63040 Clermont-Ferrand Cedex 9 (FR); CAREME, Christopher, 63040 Clermont-Ferrand Cedex 9 (FR); MERINO, José, 63040 Clermont-Ferrand Cedex 9 (FR)
(74) Mandataire: Louret, Sylvain
(86) Numéro de dépôt international: PCT/FR2018/052624
(87) Numéro de publication internationale: WO 2019/077289

(56) Documents cités:
- EP-A1- 2 765 333
- EP-A1- 2 781 370
- EP-A1- 2 957 436
- EP-A1- 3 181 374
- WO-A1-2016/156434
- WO-A1-2017/013575

## Description

La présente invention concerne des éléments de renfort de pneumatique. Elle concerne plus particulièrement des éléments architecturaux de sommet de pneumatique.

Les pneumatiques à carcasse radiale, couramment appelés «pneumatiques radiaux », se sont progressivement imposés sur la plupart des marchés et en particulier sur le marché des pneumatiques pour véhicules de tourisme. Ce succès est dû en particulier aux qualités d'endurance, de confort, de légèreté et de faible résistance au roulement de la technologie radiale.

Le pneumatique radial est essentiellement constitué de flancs souples et d'un sommet plus rigide, les flancs s'étendant radialement des bourrelets jusqu'aux épaules délimitant le sommet, le sommet supportant la bande de roulement du pneumatique. Chacune de ces parties du pneumatique ayant de fonctions propres, leur armature est également spécifique. Une caractéristique de la technologie radiale est qu'elle permet d'adapter précisément l'armature de chacune de ces parties de manière relativement indépendante.

Un pneumatique radial de tourisme comprend de manière connue une armature de carcasse radiale formée de renforts (généralement textiles) reliant les deux bourrelets du pneumatique, et une armature de sommet comprenant :
- -deux couches (ou nappes) croisées de triangulation de sommet consistant essentiellement en des renforts (généralement métalliques) formant chacune un angle d'environ 30 degrés avec la direction circonférentielle du pneumatique ;
- -une ceinture de sommet consistant essentiellement en des renforts pratiquement parallèles à la direction circonférentielle du pneumatique, appelés souvent renforts à 0 degré même s'ils forment en général un angle non nul avec la direction circonférentielle, par exemple un angle allant de 0 à 10 degrés.

En schématisant, la carcasse a pour fonction première de contenir la pression interne du pneumatique, les nappes croisées ont pour fonction première de donner au pneumatique sa rigidité de dérive et la ceinture de sommet a pour fonction première de résister à la centrifugation de sommet à haute vitesse. En outre, la coopération de tous ces éléments d'armature crée ce que l'on appelle la « triangulation du sommet ». C'est cette triangulation qui procure au pneumatique sa capacité à maintenir une forme relativement cylindrique face aux diverses sollicitations.

Chacun de ces éléments de l'armature de sommet est généralement associé par calandrage à des mélanges élastomères. L'empilement de ces éléments est alors rendu solidaire au cours de la vulcanisation du pneumatique.

Après plusieurs décennies de recherche, de progrès et d'optimisation de l'architecture des pneumatiques radiaux, c'est la combinaison de tous ces éléments d'armature (carcasse, couches croisées, ceinture) qui permet au pneumatique radial d'atteindre les indéniables performances de confort, de longévité et de coût de revient qui font son succès. Tout au long de ce développement, on a cherché à améliorer les performances des pneumatiques, par exemple du point de vue de leur masse et de leur résistance au roulement. C'est ainsi que le sommet du pneumatique radial a vu progressivement son épaisseur diminuer par l'adoption de renforts de plus en plus performants et de calandrages de plus en plus minces de manière à fabriquer les pneumatiques les plus légers possibles, présentant une moindre résistance au roulement.

Le document WO2010115860 décrit un pneumatique pour véhicule de tourisme dans lequel l'armature de sommet est constituée de trois éléments distincts et séparés : une armature de carcasse radiale composée de renforts reliant les deux talons du pneumatique, une ceinture de sommet constituée essentiellement d'éléments de renfort parallèles à la direction circonférentielle du pneumatique, et une couche de sommet de triangulation constituée essentiellement d'éléments de renfort formant un angle par rapport à la circonférence du pneumatique. Une telle architecture présente de nombreux avantages du point de vue des performances du pneumatique, mais implique un procédé de fabrication complexe, avec de nombreuses étapes. Enfin, le nombre de sous-couches présentes limite les gains potentiels en termes de masse.

Le document EP 0101400 décrit un pneumatique radial ayant une pluralité de bandes annulaires semi-rigides disposées dans une portion de couronne du pneumatique. Les bandes sont disposées sensiblement sur toute la largeur de la bande de roulement du pneumatique. Selon un mode de réalisation particulier, la bande de roulement comprend une structure de renforcement avec une bande centrale et deux bandes latérales. Les bandes relativement larges, indépendantes les unes des autres, comportent chacune des renforts fibreux incorporés dans une matrice de résine époxy, formant une structure en arceaux semi-rigides. On retrouve ainsi une grande complexité de réalisation.

Pour pallier ces différents inconvénients, notamment la complexité de réalisation, le document WO2017/013575 décrit un pneumatique pour véhicule de tourisme comprenant une zone de renfort de sommet comportant deux couches superposées radialement, chaque couche étant constituée par des bandelettes composites enrobées d'une composition élastomère disposées de manière juxtaposées et avec un angle d'environ 0° par rapport à la direction circonférentielle, qui peuvent intégrer un film thermoplastique.

EP 2 781 370 A1, EP 2 765 333 A1, EP 2 957 436 A1 et EP 3 181 374 A1 montrent un pneumatique comprenant une nappe de carcasse étant surmontée radialement vers l'extérieur du pneumatique par une zone de renfort de sommet et elle-même surmontée radialement vers l'extérieur du pneumatique par une bande de roulement, la zone de renfort de sommet comprenant une pluralité de bandelettes de renfort disposées sur au moins une nappe de bandelettes, lesdites bandelettes étant disposées de manière juxtaposées et avec un angle inférieur ou égal à 15° par rapport à la direction circonférentielle. EP 2 781 370 A1 divulgue en plus une couche composite comprenant des fibres présentant un module en extension supérieur à 55 GPa.

Cependant il existe toujours un besoin d'optimiser encore les performances en termes de rigidité d'extension et rigidité en cisaillement tout en minimisant la masse de la zone de renfort de sommet des pneumatiques.

La demanderesse en poursuivant ses recherches a découvert qu'une nouvelle architecture de zone de renfort de pneumatique permettait tout en continuant à pallier les inconvénients connus des architectures classiques, a améliorer les performances en extension et en cisaillement de cette zone de renfort.

L'invention a donc pour objet un pneumatique selon la revendication 1.

Par pneumatique, on entend un bandage qui, une fois monté sur un support de montage, par exemple une jante, délimite une cavité fermée, cette cavité étant pressurisable par un gaz.

Conformément à l'invention, chaque bandelette forme un angle inférieur ou égal à 15° avec la direction circonférentielle du pneumatique. En effet, chaque bandelette, de par sa forme, s'étend selon une direction principale selon sa plus grande longueur et cette direction principale de la bandelette forme un angle inférieur ou égal à 15° avec la direction circonférentielle du pneumatique.

Dans un premier mode de réalisation, les fibres orientées sont constituées par des filés (appelés en anglais « roving ») unitaires parallèles entre eux. Dans ce mode de réalisation, chaque couche composite est constituée par les fibres orientées enrobées de la matrice polymérique.

Dans un deuxième mode de réalisation, les fibres orientées sont constituées par des éléments filaires d'un tissu comprenant des premiers éléments filaires sensiblement parallèles entre eux et des deuxièmes éléments filaires sensiblement parallèles entre eux s'entrecroisant avec les premiers éléments filaires, les fibres orientées étant soit les premiers éléments filaires soit les deuxièmes éléments filaires. Ce deuxième mode de réalisation permet ainsi de réaliser une seule couche composite comprenant des premières et deuxièmes fibres orientées appartenant à un même tissu là où le premier mode de réalisation aurait nécessité deux couches composites comprenant chacune des fibres orientées.

Dans un mode de réalisation préférentiel, le pneumatique comprenant un sommet surmontant radialement vers l'extérieur du pneumatique la nappe de carcasse et comprenant la bande de roulement et la zone de renfort de sommet, le sommet est, à l'exception de la zone de renfort de sommet, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues du sommet du pneumatique comprennent les éléments de renfort filaires métalliques et les éléments de renfort filaires textiles.

Dans un mode de réalisation très préférentiel, le pneumatique comprenant un sommet surmontant radialement vers l'extérieur du pneumatique la nappe de carcasse, le sommet est constitué par la zone de renfort de sommet et la bande de roulement.

Dans un mode de réalisation encore plus préférentiel, la zone de renfort de sommet est, à l'exception de la ou des nappes de bandelettes noyées dans la matrice de composition de caoutchouc, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet comprennent les éléments de renfort filaires métalliques et les éléments de renfort filaires textiles.

Dans le mode de réalisation le plus préférentiel, la zone de renfort de sommet est constituée par la ou les nappes de bandelettes noyées dans la matrice de composition de caoutchouc.

En outre, de façon très avantageuse, le pneumatique est, radialement entre la nappe de carcasse et le sommet, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse et le sommet comprennent les éléments de renfort filaires métalliques et les éléments de renfort filaires textiles.

Dans un mode de réalisation préférentiel permettant d'améliorer les propriétés mécaniques du pneumatique, la zone de renfort de sommet comprend au moins deux nappes de bandelettes, une première nappe de bandelettes radialement à l'intérieur et une deuxième nappe de bandelettes radialement à l'extérieur, lesdites bandelettes de chaque première et deuxième nappe de bandelettes étant disposées de manière juxtaposées et avec un angle inférieur ou égal à 15° par rapport à la direction circonférentielle.

Toujours dans un mode de réalisation permettant d'améliorer les propriétés mécaniques du pneumatique, les bandelettes de ladite deuxième nappe de bandelettes recouvrent les bandelettes de ladite première nappe de bandelettes d'au moins 20%. Selon une variante de réalisation préférée de l'invention, le recouvrement moyen entre les bandelettes des deux nappes de bandelettes est supérieur ou égal à 40%. Avantageusement, le recouvrement moyen entre les bandelettes des première et deuxième nappes de bandelettes est inférieur ou égal à 80%, de préférence à 60%.

Le recouvrement moyen entre des première et deuxième nappes de bandelettes est la moyenne des recouvrements unitaires des bandelettes de la première nappe par les bandelettes de la deuxième nappe. Le recouvrement unitaire entre une bandelette de la première nappe et une ou plusieurs bandelettes de la deuxième nappe est le rapport en pourcent de la largeur axiale de la projection radiale de la bandelette de la première nappe sur la ou les bandelettes de la deuxième nappe sur la largeur axiale de la bandelette de la première nappe.

Dans une variante dans laquelle le pneumatique comprend au moins trois nappes de bandelettes, le recouvrement moyen entre les bandelettes de chaque nappe de bandelettes recouvrant les bandelettes de la nappe de bandelettes qui lui est radialement intérieure est supérieur ou égal à 20%, de préférence à 40% et inférieur ou égal à 80%, de préférence à 60%.

Selon une autre variante de réalisation préférée de l'invention, les bandelettes sont disposées sur quatre nappes de bandelettes, les bandelettes de chaque nappe de bandelettes recouvrant les bandelettes de la nappe de bandelettes qui lui est radialement intérieure d'au moins 20% et d'au plus 80%.

De préférence, lesdites bandelettes de chaque nappe de bandelettes sont disposées de manière juxtaposées dans chaque nappe et avec un angle inférieur à 12° avec la direction circonférentielle, plus préférentiellement inférieur ou égal à 10° avec la direction circonférentielle, encore plus préférentiellement inférieur ou égal à 5° avec la direction circonférentielle et très préférentiellement sensiblement nul avec la direction circonférentielle.

Très avantageusement, chaque nappe de bandelettes est noyée dans une matrice de composition de caoutchouc qui présente, à l'état réticulé, un module sécant en extension à 10% d'allongement supérieur ou égal à 10 MPa.

Préférentiellement, pour chaque couche composite, l'angle formé par les fibres orientées avec la direction circonférentielles va de -90° à 90°.

Le signe positif ou négatif d'un angle est défini par son orientation, c'est-à-dire le sens, horaire ou anti-horaire, dans lequel il faut tourner à partir d'une droite de référence, ici la direction circonférentielle du pneumatique, définissant l'angle pour atteindre l'autre droite définissant l'angle. Par exemple, on peut prendre comme convention qu'un angle orienté dans le sens anti-horaire à partir de la droite de référence, ici la direction circonférentielle, est de signe positif et qu'un angle orienté dans le sens horaire à partir de la droite de référence, ici la direction circonférentielle, est de signe négatif. On pourrait également prendre la convention inverse.

Selon l'invention, chaque stratifié comprend :
- n couche(s) composite(s) intérieure(s) ayant chacune des fibres dont l'angle avec la direction circonférentielle est, en valeur absolue, inférieur ou égal à 10°, n étant un nombre supérieur ou égal à 1, de préférence allant de 1 à 20, et dans le cas où n>1 ces couches composites intérieures étant juxtaposées les unes aux autres, et encadrée(s) de part et d'autre respectivement par m couches composites extérieures,
- chaque couche composite extérieure ayant des fibres formant un angle avec la direction circonférentielle, distinct de 0°, m allant de 1 à 8, et dans le cas où m>1 l'angle des fibres des couches composites extérieures successives disposées d'un même côté de la ou des couches composites intérieures étant identique ou différent.

Dans des modes de réalisation préférés, l'angle des fibres orientées de chaque couche composite intérieure est, en valeur absolue, inférieur ou égal à 5° et plus préférentiellement sensiblement nul. Toujours de façon préférée, l'angle des fibres orientées de chaque couche composite extérieure est, en valeur absolue, strictement supérieur à 10°, de préférence, en valeur absolue, va de 30° à 60°. Par en valeur absolue, va de de 30° à 60°, on comprend que l'angle va de -60° à -30° lorsque l'angle est orienté négativement et de 30° à 60° lorsque l'angle est orienté positivement.

Avantageusement, l'angle des fibres de deux couches composites extérieures disposées symétriquement de chaque côté de la ou des couches composites intérieures est identique. Ainsi, les angles des fibres des couches composites se compensent et on maximise la rectitude de chaque stratifié ce qui facilite son utilisation lors du procédé de fabrication du pneumatique. Cela permet également d'obtenir les performances mécaniques attendues du stratifié au sein du pneumatique par rapport à un stratifié présentant des défauts de rectitude.

Selon un autre mode de réalisation préféré de l'invention, n étant un nombre supérieur ou égal à 3, l'angle des fibres de deux couches composites extérieures disposées symétriquement de chaque côté des couches composites intérieures est identique en valeur absolue mais de signe opposé. Ainsi, on compense le potentiel manque de rectitude dû à l'opposition des signes des angles des fibres des couches composites en utilisant un nombre significativement important de couches composites intérieures qui rigidifient le stratifié.

### MESURES ET TESTS

Les compositions de caoutchouc sont caractérisées, avant et après cuisson, comme indiqué ci-après.

### Essais de traction

On mesure en seconde élongation (i.e., après un cycle d'accommodation au taux d'extension prévu pour la mesure elle-même). Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) les modules sécants nominaux en extension (ou contrainte apparente, en MPa) à 10% d'allongement (notés MA 10) à 23°C ± 2°C, et dans les conditions normales d'hygrométrie.

### Rigidité de dérive

Pour la mesure de la poussée de dérive, chaque pneumatique a été monté sur une roue de dimension adaptée et gonflé à 2,4 bars. On le fait rouler à une vitesse de 80 km/h sur une machine automatique appropriée (machine type « sol-plan » commercialisée par la société MTS) On fait varier la charge notée « Z » , sous un angle de dérive de 1 degré, et on mesure de manière connue la rigidité ou poussée de dérive notée « D » (corrigée de la poussée à dérive nulle), en enregistrant à l'aide de capteurs l'effort transversal sur la roue en fonction de cette charge Z ; la poussée de dérive est la pente à l'origine de la courbe D(Z). On attribue arbitrairement un indice de 100 au pneumatique témoin. Un indice supérieur à 100 pour les pneumatiques comparés au pneumatique témoin indique que les pneumatiques comparés ont une rigidité de dérive améliorée par rapport au pneumatique témoin.

### Masse du pneumatique

Le pneumatique est pesé à l'aide d'une balance. On attribue arbitrairement un indice de 100 pour la masse d'un pneumatique témoin. Un indice inférieur à 100 pour les pneumatiques comparés au pneumatique témoin indique que les pneumatiques comparés ont une masse inférieure au pneumatique témoin, ce qui est très favorable pour la performance de résistance au roulement.

### DESCRIPTION DETAILLEE DE L'INVENTION

Dans la présente description, sauf indication expresse différente, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Tous les détails de réalisation sont donnés dans la description qui suit, illustrés par les figures 1 à 4 présentées uniquement à des fins d'exemples non limitatifs, et dans lesquelles:
- la figure 1 est une représentation schématique en perspective d'un pneumatique selon l'art antérieur ;
- la figure 2 est une vue en coupe d'un pneumatique selon l'invention ;
- la figure 3A est une représentation schématique d'un exemple de renfort sommet de pneumatique selon l'invention comportant des alignements de bandelettes;
- la figure 3B est une représentation schématique d'un deuxième exemple de renfort sommet de pneumatique selon l'invention comportant des alignements de bandelettes;
- la figure 4 est une vue éclatée d'un exemple de réalisation d'une bandelette conforme à l'invention constituée d'un stratifié de 7 couches composites.

Dans le présent document, par « recouvrement de bandelettes », ou chevauchement, on entend un agencement dont les bandelettes d'une nappe de bandelettes radialement extérieure recouvrent ou chevauchent les bandelettes de la nappe de bandelettes radialement intérieure, c'est-à-dire que la projection dans la direction radiale d'une bandelette sur la bandelette de niveau inférieur est non nulle. Le recouvrement peut varier selon les modes de réalisation. Ce recouvrement forme un couplage entre les nappes de bandelettes générant une cohésion de l'ensemble de la zone de renfort du sommet. Ce couplage permet en particulier une transmission d'efforts de cisaillement entre les nappes de bandelettes. On ne tient pas compte dans ce positionnement de la présence de la matrice de composition de caoutchouc.

Dans les figures, on a représenté un repère X, Y, Z correspondant aux orientations habituelles respectivement axiale (selon la direction Y), radiale (selon la direction Z) et circonférentielle (selon la direction X) d'un pneumatique.

Par « direction longitudinale » ou « direction circonférentielle », on entend une direction qui correspond à la périphérie du pneumatique et qui est définie par la direction de roulement du pneumatique.

Par « direction axiale », on entend une direction parallèle à l'axe de roulement du pneumatique.

Par « bande de roulement » d'un pneumatique, on entend une quantité de mélange élastomère délimitée par des surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement du pneumatique et un bourrelet de ce pneumatique.

Par « bourrelet » d'un pneumatique, on entend une partie du pneumatique destinée à prendre assise sur une jante de roue.

Dans le présent document, par « carcasse », ou « nappe de carcasse », on entend une structure de renfort pour pneumatique sous forme d'une couche constituée d'une matrice en matériau élastomère dans laquelle des filaments ou fils, généralement textiles, sont agencés selon un alignement sensiblement parallèle et longitudinal. La nappe de carcasse est avantageusement fabriquée à plat, en grande longueur, puis découpée aux dimensions adéquates pour la fabrication d'un pneumatique pour lequel la nappe de carcasse est adaptée.

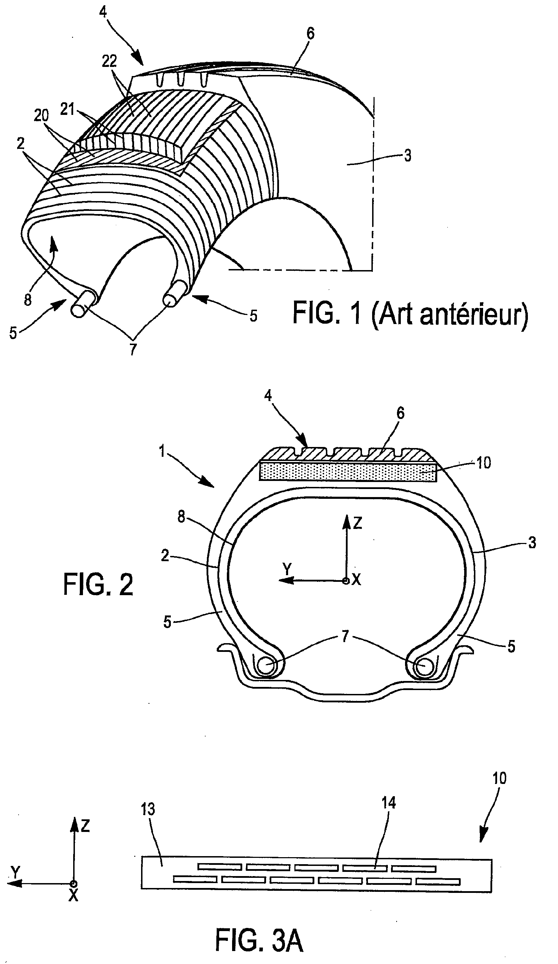

La figure 1 illustre une vue en perspective d'un pneumatique partiellement découpé couche par couche, pour véhicule de tourisme selon l'état de la technique. Une armature de carcasse 2 reliée aux bourrelets 5 autour de tringles 7 s'étend le long des flancs 3 et du sommet 4. L'armature de carcasse 2 est formée de renforts orientés radialement. Les renforts sont des câbles textiles (par exemple en nylon, rayonne, polyester). Au niveau du sommet du pneumatique, la carcasse est surmontée de deux couches croisées 20, 21 de triangulation, et d'une ceinture 22. Les deux couches croisées 20, 21 de triangulation de sommet comportent des renforts orientés selon un angle compris sensiblement entre 20 et 40 degrés de part et d'autre de la direction circonférentielle du pneumatique. Des câbles métalliques constituent les renforts des couches croisées 20, 21. Une couche 8 de mélange élastomère d'étanchéité recouvre la cavité interne du pneumatique. Une bande de roulement 6 surmonte l'ensemble. Cette architecture implique plusieurs couches de semi-finis, requérant un procédé de fabrication avec de nombreuses étapes intermédiaires. Les nombreuses couches rendent le pneumatique relativement lourd.

La figure 2 représente un pneumatique 1 selon l'invention, comprenant des flancs 3 surmontés d'un sommet 4 et une nappe de carcasse 2 s'étendant d'un bourrelet 5 à l'autre, en passant par les flancs 3 et le sommet 4. Le sommet 4 surmonte radialement vers l'extérieur du pneumatique la nappe de carcasse 2 et comprend, en plus de la bande de roulement 6, une zone de renfort sommet 10 pourvue de bandelettes formant un angle inférieur ou égal à 15° avec la direction circonférentielle, de préférence inférieur à 12° avec la direction circonférentielle, plus préférentiellement inférieur ou égal à 10° avec la direction circonférentielle, encore plus préférentiellement inférieur ou égal à 5° avec la direction circonférentielle et très préférentiellement circonférentielles, c'est-à-dire orientées sensiblement à 0° par rapport à la direction circonférentielle. Divers modes de réalisation des bandelettes sont décrits ci-après. La zone de renfort de sommet 10 est radialement agencée entre la bande de roulement 6 et la nappe de carcasse 2.

La figure 3A illustre un premier mode de réalisation d'une zone sommet 10 selon l'invention. Selon ce mode de réalisation, une pluralité de bandelettes (14) constituent deux nappes de bandelettes, une première nappe de bandelettes radialement à l'intérieur et une deuxième nappe de bandelettes radialement à l'extérieur, les bandelettes de ladite deuxième nappe de bandelettes recouvrant les bandelettes de ladite première nappe de bandelettes d'au moins 20%, lesdites bandelettes (14) desdites première et deuxième nappe de bandelettes étant disposées de manière juxtaposées. Chacune de ces nappes de bandelettes est noyée dans une matrice de composition de caoutchouc (13) qui présente, à l'état réticulé, un module sécant en extension à 10% d'allongement supérieur ou égal à 10 MPa.

Chaque bandelette de renfort des nappes de bandelettes est constituée par un stratifié d'au moins 3 couches composites, chaque couche composite comprenant des fibres à haut module orientées, parallèles entre elles et formant un angle avec la direction circonférentielle, enrobées d'une matrice polymérique.

### Matrice de composition de caoutchouc

Par l'expression composition "à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

On notera que les composés mentionnés ci-dessous et entrant dans la préparation de compositions de caoutchouc peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

La matrice de composition de caoutchouc est à base d'au moins un élastomère, diénique ou non diénique (par exemple thermoplastique) ; il s'agit de préférence d'une composition du type réticulée ou réticulable c'est-à-dire qu'elle comprend alors un système de réticulation (notamment un système de vulcanisation) adapté pour permettre la réticulation (durcissement) de la composition lors de sa cuisson (ou cuisson de l'article en caoutchouc tel que pneumatique intégrant une zone de sommet conforme à l'invention).

Préférentiellement, cette matrice de composition de caoutchouc a pour caractéristique sa rigidité, c'est-à-dire de présenter un module sécant en extension à 10% d'allongement, le module MA10 de chaque composition de caoutchouc est par définition supérieur ou égal à 10 MPa, de préférence supérieur à 10 MPa.

Selon une autre variante de réalisation préférée de l'invention, cette matrice de composition de caoutchouc peut également présenter une très haute rigidité, c'est-à-dire un module MA10 supérieur ou égal à 30 MPa.

De préférence, l'élastomère est un élastomère diénique. De manière connue, les élastomères diéniques peuvent être classés dans deux catégories : "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

La composition de caoutchouc peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs connus de l'homme de l'art et habituellement utilisés dans les compositions de caoutchouc destinées à la fabrication de pneumatiques, tels que par exemple des charges renforçantes comme le noir de carbone ou la silice, des agents de couplage, des charges non-renforçantes, des plastifiants (huiles plastifiantes et/ou résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269), un système de réticulation, par exemple à base de soufre et autres agents de vulcanisation, et/ou de peroxyde et/ou de bismaléimide.

L'homme de l'art saura, à la lumière de la présente description, ajuster la formulation de la composition de caoutchouc afin d'atteindre les niveaux de propriétés (notamment module MA10) souhaités, et adapter la formulation à l'application spécifique envisagée.

Il est bien connu d'augmenter la rigidité des compositions de caoutchouc en augmentant par exemple leur taux de charge renforçante, le taux de soufre et autres agents de vulcanisation, ou encore en introduisant des résines renforçantes, toutes ces solutions pouvant être cumulées pour l'obtention des plus hautes rigidités.

L'espace dans la direction radiale (ou épaisseur) entre deux nappes de bandelettes successives occupée par la matrice de composition de caoutchouc est de préférence comprise entre 0,05 et 2 mm, plus préférentiellement entre 0,1 et 1 mm. Par exemple, des épaisseurs de 0,2 à 0,8 mm se sont révélées tout à fait convenir pour le renforcement d'un pneumatique.

### Nappes de bandelettes

Dans une nappe de bandelettes, le positionnement des bandelettes en quinconce est réalisé par exemple par un premier trancanage débutant à un azimut donné, et un second trancanage avec un pas identique débutant à 180 degrés. En variante, le positionnement des bandelettes est réalisé par un premier trancanage dans une direction axiale donnée, suivi d'un second trancanage dans la direction axiale opposée.

Dans l'exemple de réalisation de la figure 3A, avec une disposition symétrique, deux nappes de bandelettes (14) sont agencées avec un décalage latéral entre les positions des bandelettes des deux nappes de bandelettes d'environ un demi-pas de la bandelette. Le plan principal de chaque nappe de bandelettes est sensiblement axial. Un tel agencement a pour effet de recouvrir les ponts de mélange élastomère de la première nappe, par les bandelettes constituant la deuxième nappe de bandelettes. Les ponts de mélange élastomère entre les bandelettes de la première nappe de bandelettes sont ainsi positionnés sensiblement au milieu des largeurs respectives des bandelettes de la nappe de bandelettes adjacente. Dans cet exemple, la nappe de bandelettes radialement extérieure comporte un enroulement de moins de façon à compenser l'effet du décalage latéral. Le recouvrement moyen entre les bandelettes des deux nappes de bandelettes est d'au moins 20% et de préférence supérieur à 40% et inférieur ou égal à 80%, de préférence à 60%.

L'exemple de réalisation de la figure 3A comporte deux nappes de bandelettes de même largeur, dont l'une est décalée par rapport à l'autre.

En variante, les points de départ et d'arrêt des nappes de bandelettes peuvent éventuellement être unifiés afin d'assurer une certaine uniformité.

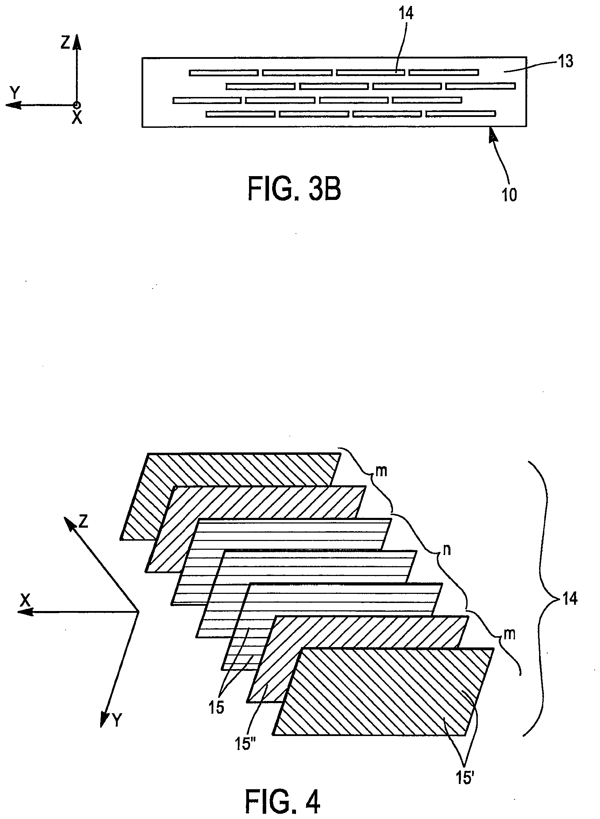

La figure 3B illustre un autre mode de réalisation d'une zone sommet 10 selon l'invention. Selon ce mode de réalisation, une pluralité de bandelettes (14) constituent quatre nappes de bandelettes, les bandelettes de chaque nappe de bandelettes recouvrant les bandelettes de la nappe de bandelettes qui lui est radialement intérieure d'au moins 20% et d'au plus 80%, ici d'au plus 50%, lesdites bandelettes (14) de chaque nappe étant disposées de manière juxtaposées et avec un angle par rapport à la direction circonférentielle sensiblement proche de 0 degré, et plus largement selon un angle inférieur ou égal à 15° avec la direction circonférentielle, de préférence inférieur à 12° avec la direction circonférentielle, plus préférentiellement inférieur ou égal à 10° avec la direction circonférentielle, encore plus préférentiellement inférieur ou égal à 5° avec la direction circonférentielle. Le positionnement des bandelettes en quinconce est réalisé par exemple par un premier trancanage débutant à un azimut donné et les trancanages suivants pouvant démarrer tous les 90°.

### Bandelettes composites

Chaque bandelette (14) de renfort est constituée par un stratifié d'au moins 3 couches composites, chaque couche composite comprenant des fibres (15, 15', 15") à haut module orientées, parallèles entre elles et formant un angle avec la direction circonférentielle, enrobées d'une matrice polymérique. De préférence, l'angle formé par les fibres orientées avec la direction circonférentielles va de -90° à 90°.

Chaque stratifié comprend :
- n couche(s) composite(s) intérieure(s) ayant chacune des fibres (15) dont l'angle avec la direction circonférentielle est, en valeur absolue, inférieur ou égal à 10°, n étant un nombre supérieur ou égal à 1, de préférence allant de 1 à 20, plus préférentiellement allant de 1 à 12, encore plus préférentiellement de 1 à 6, et dans le cas où n>1 ces couches composites intérieures étant juxtaposées les unes aux autres, et encadrée(s) de part et d'autre respectivement par m couches composites extérieures,
- chaque couche composite extérieure ayant des fibres (15', 15") formant un angle avec la direction circonférentielle distinct de 0°, m allant de 1 à 8, et dans le cas où m>1 l'angle des fibres (15', 15") des couches composites extérieures successives disposées d'un même côté des couches composites intérieures étant identique ou différent, et l'angle des fibres (15', 15") de deux couches composites extérieures disposées symétriquement de chaque côté de la ou des couches composites intérieures étant identique.

Le nombre total de couches dans le stratifié est donc de n+ 2m.

Dans ce mode de réalisation préférentiel, l'angle des fibres orientées de chaque couche composite intérieure est, en valeur absolue, inférieur ou égal à 5° et plus préférentiellement sensiblement nul. Toujours de façon préférée, l'angle des fibres orientées de chaque couche composite extérieure est, en valeur absolue, strictement supérieur à 10°, de préférence, en valeur absolue, va de 30° à 60°.

La figure 4 illustre un mode de réalisation dans lequel n est égal à 3 et m est égal à 2.

Selon un mode de réalisation préférentiel de l'invention, n et m sont égaux à 1. Plus préférentiellement l'angle des fibres (15', 15") des couches composites extérieures est égal à +45° ou à -45°.

Selon un autre mode de réalisation préférentiel de l'invention, n est égal à 1 et m est égal à 2.

Selon un autre mode de réalisation de l'invention, chaque stratifié comprend :
- n couches composites intérieures ayant chacune des fibres (15) dont l'angle avec la direction circonférentielle est, en valeur absolue, inférieur ou égal à 10°, n étant un nombre supérieur ou égal à 3, de préférence allant de 3 à 20, plus préférentiellement allant de 3 à 12, encore plus préférentiellement de 3 à 6, ces couches composites intérieures étant juxtaposées les unes aux autres et encadrées de part et d'autre respectivement par m couches composites extérieures,
- chaque couche composite extérieure ayant des fibres (15', 15") formant un angle avec la direction circonférentielle distinct de 0°, m allant de 1 à 8, et dans le cas où m>1 l'angle des fibres (15', 15") des couches composites extérieures successives disposées d'un même côté des couches composites intérieures étant identique ou différent, et l'angle des fibres (15', 15") de deux couches composites extérieures disposées symétriquement de chaque côté des couches composites intérieures étant identique en valeur absolue mais de signe opposé.

Dans cet autre mode de réalisation préféré, l'angle des fibres orientées de chaque couche composite intérieure est, en valeur absolue, inférieur ou égal à 5° et plus préférentiellement sensiblement nul. Toujours de façon préférée, l'angle des fibres orientées de chaque couche composite extérieure est, en valeur absolue, strictement supérieur à 10°, de préférence, en valeur absolue, va de 30° à 60°.

Plus préférentiellement l'angle des fibres des couches composites extérieures est égal à +45° ou à -45°.

Les bandelettes composites peuvent être réalisées à partir de couches composites préimprégnées NTPT ThinPreg 450™ ou NTPT ThinPreg 402™. (qui peuvent être obtenues notamment en l'application du procédé décrit dans le document WO 2016/198171).

Les couches composites préimprégnées sont déposées crues ou non polymérisées selon les angles souhaités de stratification et forment une laize d'une largeur supérieure à celle des bandelettes.

La laize stratifiée est découpée en bandelette crue ou non polymérisée de largeur souhaitée.

Les bandelettes crues sont trancannées sur un tambour de grand diamètre (ie 2 mètre de diamètre). Les bandelettes sont cuites sous vide (-850mBar) et sous pression (5 bars) à l'aide des périphériques de cuisson usuels (tels que tissu d'arrachage, feutre de drainage, film anti-adhésif micro-perforé ou non, film à vide etc.).

Selon un autre mode de réalisation la laize stratifiée est déposée sur un tambour de grand diamètre et cuite sous vide (-850mBar) et sous pression (5 bars) à l'aide des périphériques de cuisson usuels. Après cuisson, la laize est découpée en bandelettes.

De préférence, les bandelettes présentent une épaisseur inférieure ou égale à 1 mm, et plus préférentiellement inférieure ou égale à 0,7 mm.

### Eléments constitutifs des bandelettes

La matrice polymérique de chaque couche composite de stratifié d'une bandelette comprend un polymère thermodurcissable ou un polymère thermoplastique, utilisé seul respectivement ou en coupage avec d'autres polymères.

Préférentiellement la matrice polymérique peut être choisie parmi les résines thermodurcissables de type polyépoxides, polyester insaturés, vinylester, cyanate ester, bismalémimides, les polyuréthanes et un coupage de ces résines, ou bien parmi les résines thermoplastiques comme les polyesters (PET, PBT, PEN, PBN), les polyamides (nylon, aramide), les polyimides, les polyethersulfones, les polyphénylènesulfone, les polycétones (PK, PEEK). Conviennent particulièrement parmi les résines précitées, les résines thermodurcissables ayant une température de transition vitreuse supérieure ou égale à 160°C et les résines thermoplastiques ayant une température de fusion supérieure ou égale à 180°C. Notons que des charges renforçantes (silice, noir de carbone), ou des charges thermoplastiques (Orgasol de chez Arkema) ou des charges élastomèriques (Kane Ace de chez Kaneka) pourront être ajoutées aux résines ci-dessus.

Conviennent particulièrement à l'invention des couches composites possédant une masse surfacique d'environ 200g/m2 et une épaisseur avant cuisson d'environ 0,2 mm.

De préférence, on utilise des couches plus fines ayant une masse surfacique inférieure ou égale à 80g/m2 , plus préférentiellement cette masse allant de 18 g/m2 à 80g/m2 , et une épaisseur avant cuisson inférieure à 0,06 mm.

L'homme de l'art saura adapter le nombre de couches composites selon la masse surfacique de ces couches composites.

Les fibres (15', 15") de chaque couche composite de stratifié comprennent des fibres de haut module. On entendra dans la présente demande, par haut module, un module en extension (module d'Young) supérieur ou égal à 55 GPa. Un tel module en extension est mesuré conformément à la norme ASTM D4848-98 (2012).

Selon une variante de réalisation préférée de l'invention les fibres à haut module comprennent des fibres de verre, De façon préférentielle, les fibres de verre sont majoritaires, c'est-à-dire représentent plus de 50 % des fibres d'une même couche.

Plus préférentiellement encore, les fibres de chaque couche composite de stratifié sont constitués par des fibres de verre.

Préférentiellement, le ratio volumique matrice polymérique/fibres de chaque couche composite de stratifié allant de 30/70, de préférence de 35/65, à 80/20, de préférence à 70/30 et étant préférentiellement d'environ 45/55.

Selon une autre variante de réalisation préférée de l'invention, les fibres à haut module comprennent des fibres de carbone. De façon préférentielle, les fibres de carbone sont majoritaires, c'est-à-dire représente plus de 50 % des fibres d'une même couche.

Plus préférentiellement encore, les fibres de chaque couche composite de stratifié sont constitués par des fibres de carbone.

Préférentiellement, le ratio volumique matrice polymérique/fibres de chaque couche composite de stratifié allant de 30/70, de préférence de 35/65 à 90/10, de préférence à 60/40, et étant préférentiellement d'environ 50/50.

Selon d'autres variantes de réalisation préférées de l'invention, les fibres à haut module comprennent des fibres aramide, des fibres de basalte ou des fibres de quartz.

### EXEMPLES

Les exemples qui suivent permettent d'illustrer l'invention, cette dernière ne saurait cependant être limitée à ces seuls exemples.

Ces exemples ont pour but de démontrer les propriétés améliorées de pneumatiques conformes à l'invention par rapport à un pneumatique témoin comportant une architecture classique et un pneumatique selon l'art antérieur.

On compare dans une même dimension 175/65R14, les pneumatiques suivants :
- un pneumatique PT1 comprend une architecture classique (sommet comportant deux nappes sommet et une couche de fils de nylon orientés à 0°),
- un pneumatique PT2 selon l'art antérieur WO2017/013575 (figure 8),
- des pneumatiques PA3 et PA4 conformes à l'invention.

Les pneumatiques conformes PT2, PA3 et PA4 comprennent tous une zone de renfort de sommet comprenant deux nappes de bandelettes constituées par des bandelettes de renfort, de largeur 15mm, juxtaposées et avec un angle d'environ 0° par rapport à la direction circonférentielles, les deux nappes de bandelettes présentant un recouvrement de 46%.

L'épaisseur de matrice de composition de caoutchouc entre les deux nappes de bandelettes est de 0,3 mm, la matrice de composition de caoutchouc ayant un module MA10 de 54 MPa.

On notera que, contrairement au pneumatique PT1, pour les pneumatiques PA3 et PA4, le sommet 4 est, à l'exception de la zone de renfort de sommet 10, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues du sommet du pneumatique comprennent les éléments de renfort filaires métalliques et les éléments de renfort filaires textiles, par exemples ceux du pneumatique PT1. En l'espèce, pour chaque pneumatique PA3 et PA4, le sommet 4 est constitué par la zone de renfort de sommet 10 et la bande de roulement 6.

On notera également que la zone de renfort de sommet 10 est, à l'exception des nappes de bandelettes noyées dans la matrice de composition de caoutchouc, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de la zone de renfort de sommet du pneumatique comprennent les éléments de renfort filaires métalliques et les éléments de renfort filaires textiles. En l'espèce, pour chaque pneumatique PA3 et PA4, la zone de renfort de sommet 10 est constituée par les nappes de bandelettes noyées dans la matrice de composition de caoutchouc.

On notera enfin que, chaque pneumatique PA3 et PA4 est, radialement entre la nappe de carcasse 2 et le sommet 4, dépourvu de toute nappe renforcée par des éléments de renfort filaires agencés sensiblement parallèlement les uns aux autres et noyés dans une matrice de composition de caoutchouc. Les éléments de renfort filaires de telles nappes renforcées exclues d'entre la nappe de carcasse 2 et le sommet 4 comprennent les éléments de renfort filaires métalliques et les éléments de renfort filaires textiles.

Les bandelettes du pneumatique PT2 selon l'art antérieur sont réalisées avec une matrice en PET (polyéthylène téréphtalate), dans laquelle sont intégrés des câbles textiles (aramide, retors constitués de 2 brins de 167 tex retordus ensemble avec une torsion de 315 tours par mètre à 0°. Elles présentent une épaisseur de 0.5 mm.

Les bandelettes des pneumatiques PA3 et PA4 réalisées conformément au mode de réalisation décrit précédemment, sont constituées par un stratifié comprenant 10 couches composites enrobées d'une matrice polymérique thermodurcissable constituée par une résine polyépoxide (couches composites commercialisées par la société NTPT sous le nom commercial « ThinPreg 402™ »):
- 6 couches composites intérieures ayant chacune des fibres orientées, parallèles entre elles et formant un angle avec la direction circonférentielle de 0°,
- et deux couches composites extérieures successives disposées de chaque côté des couches composites intérieures, les deux couches adjacentes à la couche composite intérieure ayant des fibres orientées, parallèles entre elles et formant un angle de -45° avec la direction circonférentielle et les deux couches les plus extérieures ayant des fibres orientées, parallèles entre elles et formant un angle de +45° avec la direction circonférentielle,
- chaque couche composite a une épaisseur inférieure ou égale à 80 microns et les bandelettes une épaisseur inférieure ou égale à 0,5 mm

Les bandelettes du pneumatique PA3 comprennent dans leurs couches composites des fibres de verre haut module de type H commercialisé par la société Owens Corning avec ratio volumique matrice polymérique/fibres de chaque couche composite de 50/50 et une épaisseur de 0,5mm, celles du pneumatique PA4 comprenant des fibres de carbone « T700SC » commercialisé par la société Toray ratio volumique matrice polymérique/fibres de chaque couche composite de 50/50 et une épaisseur de 0,42mm.

La matrice de compositions de caoutchouc utilisée ici, est une composition de haute rigidité (module MA10 égal à environ 55 MPa) typiquement du type pour bourrelets (5) de pneumatique, à base de caoutchouc naturel, de noir de carbone (environ 75 pce), de résine renforçante (environ 20 pce de résine phénolique associés à environ 8 pce de H3M et HMT), d'antioxydant, d'un système de vulcanisation à fort taux de soufre (environ 5 pce) et des additifs usuels de vulcanisation ; elle comporte en outre environ 10 pce d'huile paraffinique et 8 pce de résine tackifiante (résine butyl-phénol-acétylène). L'adhésion entre les nappes de bandelettes et la matrice de composition de caoutchouc est assurée par une colle du type RFL qui a été déposée de manière connue sur les bandelettes.

Le tableau 1 qui suit, représente pour chaque pneumatique, la comparaison de leur masse et rigidité de dérive (avec un indice de 100 pour le pneumatique classique témoin PT1).

On observe les gains rigidité de dérive très significatifs obtenus pour les pneumatiques PA3 et PA4 conformes à l'invention vis-à-vis de pneumatique témoin classique PT1 et également en légère augmentation vis-à-vis du pneumatique PT2 qui présente déjà une amélioration par rapport à PT1. De même pour la masse du pneu, on constate une baisse très significative pour les pneumatiques PA3 et PA4 conformes à l'invention vis-à-vis de pneumatique témoin classique PT1 et également améliorée vis-à-vis du pneumatique PT2.

**Tableau 1**

| **Pneumatique** | **Masse du pneumatique** | **Rigidité de dérive** |
|---|---|---|
| **PT1** | 100 | 100 |
| **PT2** | 92 | 108 |
| **PA3** | 89 | 110 |
| **PA4** | 87 | 112 |

## Revendications

1. Pneumatique (1) comprenant une nappe de carcasse (2) reliant deux bourrelets (5) par l'intermédiaire de deux flancs (3), ladite nappe de carcasse (2) étant surmontée radialement vers l'extérieur du pneumatique par une zone de renfort de sommet (10) et elle-même surmontée radialement vers l'extérieur du pneumatique par une bande de roulement (6), la zone de renfort de sommet (10) comprenant une pluralité de bandelettes (14) de renfort disposées sur au moins une nappe de bandelettes, lesdites bandelettes (14) étant disposées de manière juxtaposées et avec un angle inférieur ou égal à 15° par rapport à la direction circonférentielle, chaque bandelette (14) de renfort étant constituée par un stratifié d'au moins 3 couches composites, chaque couche composite comprenant des fibres orientées (15, 15', 15") présentant un module en extension supérieur ou égal à 55 GPa mesuré conformément à la norme ASTM D4848-98 de 2012, parallèles entre elles, enrobées d'une matrice polymérique, **caractérisé en ce que** chaque stratifié comprend :
- n couche(s) composite(s) intérieure(s) ayant chacune des fibres (15) dont l'angle avec la direction circonférentielle est, en valeur absolue, inférieur ou égal à 10°, n étant un nombre supérieur ou égal à 1, de préférence allant de 1 à 20, et dans le cas où n>1 ces couches composites intérieures étant juxtaposées les unes aux autres, et encadrée(s) de part et d'autre respectivement par m couche(s) composite(s) extérieure(s), chaque couche composite extérieure ayant des fibres (15', 15") formant un angle avec la direction circonférentielle distinct de 0°, m allant de 1 à 8, et dans le cas où m>1 l'angle des fibres (15', 15") des couches composites extérieures successives disposées d'un même côté de la ou des couches composites intérieures est identique ou différent.

2. Pneumatique (1) selon la revendication précédente, la zone de renfort de sommet (10) comprend au moins deux nappes (12) de bandelettes (14), une première nappe de bandelettes radialement à l'intérieur et une deuxième nappe de bandelettes radialement à l'extérieur, lesdites bandelettes (14) de chaque première et deuxième nappe (12) de bandelettes étant disposées de manière juxtaposées et avec un angle inférieur ou égal à 15° par rapport à la direction circonférentielle (Z).

3. Pneumatique (1) selon la revendication précédente, dans lequel le recouvrement moyen entre les bandelettes (14) des deux nappes de bandelettes est supérieur ou égal à 20%, de préférence à 40%.

4. Pneumatique (1) selon la revendication 2 ou 3, dans lequel le recouvrement moyen entre les bandelettes (14) des deux nappes de bandelettes est inférieur ou égal à 80%, de préférence à 60%.

5. Pneumatique (1) selon l'une quelconque des revendications précédentes, dans lequel chaque nappe (12) de bandelettes (14) est noyée dans une matrice (13) de composition de caoutchouc qui présente, à l'état réticulé, un module sécant en extension à 10% d'allongement supérieur ou égal à 10 MPa mésuré conformément à la norme française NF T 46-002 de septembre 1988.

6. Pneumatique (1) selon l'une quelconque des revendications précédentes, dans lequel l'angle des fibres (15', 15") de deux couches composites extérieures disposées symétriquement de chaque côté de la ou des couches composites intérieures est identique.

7. Pneumatique (1) selon l'une quelconque des revendications précédentes, dans lequel le nombre n va de 1 à 12, préférentiellement de 1 à 6.

8. Pneumatique (1) selon l'une quelconque des revendications 1 à 5, dans lequel l'angle des fibres (15', 15") de deux couches composites extérieures disposées symétriquement de chaque côté des couches composites intérieures est identique en valeur absolue mais de signe opposé.

9. Pneumatique (1) selon la revendication précédente, dans lequel n est supérieur ou égal à 3, n va de 3 à 12, préférentiellement de 3 à 6.

## Patentansprüche

1. Reifen (1) umfassend eine Karkassenlage (2), die zwei Wülste (5) mittels zweier Flanken (3) verbindet, wobei die Karkassenlage (2) radial zum Äußeren des Reifens hin von einem Scheitelverstärkungsbereich (10) überdeckt ist und selbst radial zum Äußeren des Reifens hin von einem Laufstreifen (6) überdeckt ist, wobei der Scheitelverstärkungsbereich (10) eine Mehrzahl von Verstärkungsstreifen (14) umfasst, die auf mindestens einer Streifenlage angeordnet sind, wobei die Streifen (14) nebeneinander und mit einem Winkel kleiner als oder gleich 15° bezogen auf die Umfangsrichtung angeordnet sind, wobei jeder Verstärkungsstreifen (14) von einem Schichtstoff aus mindestens 3 Verbundschichten gebildet ist, wobei jede Verbundschicht orientierte Fasern (15, 15', 15'') mit einem Dehnungsmodul größer als oder gleich 55 GPa, gemessen nach der Norm ASTM D4848-98 von 2012, die parallel zueinander verlaufen, umfasst, die von einer Polymermatrix ummantelt sind,
**dadurch gekennzeichnet, dass** jeder Schichtstoff Folgendes umfasst:
- n innere Verbundschicht(en) jeweils mit Fasern (15), deren Winkel mit der Umfangsrichtung im Absolutwert kleiner als oder gleich 10° ist, wobei n eine Zahl größer als oder gleich 1, vorzugsweise von 1 bis 20 ist, und in dem Fall, dass n > 1, diese inneren Verbundschichten nebeneinander angeordnet sind und beiderseits jeweils von m äußeren Verbundschicht(en) eingerahmt sind, wobei jede äußere Verbundschicht Fasern (15', 15") aufweist, die einen Winkel mit der Umfangsrichtung bilden, der von 0° verschieden ist, wobei m von 1 bis 8 reicht, und in dem Fall, dass m > 1, der Winkel der Fasern (15', 15") der aufeinanderfolgenden äußeren Verbundschichten, die auf einer selben Seite der inneren Verbundschicht(en) angeordnet sind, identisch oder verschieden ist.

2. Reifen (1) nach dem vorhergehenden Anspruch, wobei der Scheitelverstärkungsbereich (10) mindestens zwei Lagen (12) von Streifen (14) umfasst, eine erste Streifenlage radial innen und eine zweite Streifenlage radial außen, wobei die Streifen (14) jeder ersten und zweiten Streifenlage (12) nebeneinander und mit einem Winkel kleiner als oder gleich 15° bezogen auf die Umfangsrichtung (Z) angeordnet sind.

3. Reifen (1) nach dem vorhergehenden Anspruch, wobei die mittlere Überlappung zwischen den Streifen (14) der zwei Streifenlagen größer als oder gleich 20 %, vorzugsweise größer als oder gleich 40 % ist.

4. Reifen (1) nach Anspruch 2 oder 3, wobei die mittlere Überlappung zwischen den Streifen (14) der zwei Streifenlagen kleiner als oder gleich 80 %, vorzugsweise kleiner als oder gleich 60 % ist.

5. Reifen (1) nach einem der vorhergehenden Ansprüche, wobei jede Lage (12) von Streifen (14) in eine Matrix (13) aus einer Gummizusammensetzung eingebettet ist, die im vernetzten Zustand einen Dehnungssekantenmodul bei 10 % Dehnung von größer als oder gleich 10 MPa, gemessen nach der französischen Norm NF T 46-002 vom September 1988, aufweist.

6. Reifen (1) nach einem der vorhergehenden Ansprüche, wobei der Winkel der Fasern (15', 15") zweier äußerer Verbundschichten, die symmetrisch auf jeder Seite der inneren Verbundschicht(en) angeordnet sind, identisch ist.

7. Reifen (1) nach einem der vorhergehenden Ansprüche, wobei die Zahl n von 1 bis 12, vorzugsweise von 1 bis 6 reicht.

8. Reifen (1) nach einem der Ansprüche 1 bis 5, wobei der Winkel der Fasern (15', 15") zweier äußerer Verbundschichten, die symmetrisch auf jeder Seite der inneren Verbundschicht(en) angeordnet sind, im Absolutwert identisch ist, jedoch ein umgekehrtes Vorzeichen aufweist.

9. Reifen (1) nach dem vorhergehenden Anspruch, wobei n größer als oder gleich 3 ist, n von 3 bis 12, vorzugsweise von 3 bis 6 reicht.

## Claims

1. Tyre (1) comprising a carcass ply (2) connecting two beads (5) via two sidewalls (3), the said carcass ply (2) being surmounted radially towards the outside of the tyre by a crown reinforcing zone (10) which is itself surmounted radially towards the outside of the tyre by a tread (6), the crown reinforcing zone (10) comprising a plurality of reinforcing strips (14) arranged over at least one ply of strips, the said strips (14) being arranged so that they are juxtaposed and at an angle less than or equal to 15° with respect to the circumferential direction, each reinforcing strip (14) being made up of a laminate of at least 3 composite layers, each composite layer containing oriented fibres (15, 15', 15") having a tensile modulus greater than or equal to 55 GPa, measured according to Standard ASTM D4848-98 from 2012, which are parallel to one another and coated in a polymer matrix, **characterized in that** each laminate comprises:
- n interior composite layer(s) each having fibres (15) of which the angle with the circumferential direction is, in terms of absolute value, less than or equal to 10°, n being a number greater than or equal to 1, preferably ranging from 1 to 20, and in the case where n>1, these interior composite layers being juxtaposed with one another and flanked on each side respectively by m exterior composite layer(s), each exterior composite layer having fibres (15', 15") that make with the circumferential direction an angle distinct from 0°, m ranging from 1 to 8 and, in the case where m>1, the angle of the fibres (15', 15") of the successive exterior composite layers positioned on the one same side of the interior composite layer or layers being identical or different.

2. Tyre (1) according to the preceding claim, the crown reinforcing zone (10) comprises at least two plies (12) of strips (14), a first ply of strips radially on the inside and a second ply of strips radially on the outside, the said strips (14) of each first and second ply (12) of strips being arranged so that they are juxtaposed with each other and at an angle less than or equal to 15° with respect to the circumferential direction (Z).

3. Tyre (1) according to the preceding claim, in which the mean overlap between the strips (14) of the two plies of strips is greater than or equal to 20%, preferably greater than or equal to 40%.

4. Tyre (1) according to Claim 2 or 3, in which the mean overlap between the strips (14) of the two plies of strips is less than or equal to 80%, preferably less than or equal to 60%.

5. Tyre (1) according to any one of the preceding claims, in which each ply (12) of strips (14) is embedded in a matrix (13) of rubber composition which, when cross-linked, has a secant extension modulus at 10% strain greater than or equal to 10 MPa measured according to French Standard NF T 46-002 from September 1988.

6. Tyre (1) according to any one of the preceding claims, in which the angle of the fibres (15', 15") of two exterior composite layers positioned symmetrically on each side of the interior composite layer or layers is identical.

7. Tyre (1) according to any one of the preceding claims, in which the number n ranges from 1 to 12, preferably from 1 to 6.

8. Tyre (1) according to any one of the preceding claims, in which the angle of the fibres (15', 15") of two exterior composite layers positioned symmetrically on each side of the interior composite layer or layers is identical in terms of absolute value but of opposite sign.

9. Tyre (1) according to the preceding claim, in which n is greater than or equal to 3, n ranges from 3 to 12, preferably from 3 to 6.
